**Europäisches Patentamt**

(19) **European Patent Office**

**Office européen des brevets**

(11) Veröffentlichungsnummer: **0 095 627**
**B1**

(12) **EUROPÄISCHE PATENTSCHRIFT**

(45) Veröffentlichungstag der Patentschrift:
**29.03.89**

(21) Anmeldenummer: **83104700.6**

(22) Anmeldetag: **13.05.83**

(51) Int. Cl.⁴: **C 09 D 3/00,** C 08 F 265/06,
C 08 F 2/06, C 08 F 291/00

(54) **Wärmehärtbare Acrylatbindemittel und Verfahren zu ihrer Herstellung.**

(30) Priorität: **27.05.82 AT 2083/82**

(43) Veröffentlichungstag der Anmeldung:
**07.12.83 Patentblatt 83/49**

(45) Bekanntmachung des Hinweises auf die Patenterteilung:
**29.03.89 Patentblatt 89/13**

(84) Benannte Vertragsstaaten:
**DE FR GB IT**

(56) Entgegenhaltungen:
**FR-A-2 077 065**
**FR-A-2 120 807**
**FR-A-2 320 966**
**US-A-3 651 005**
**US-A-4 124 551**

**CHEMICAL ABSTRACTS, Band 83, Nr. 20, 17. November 1975, Seiten 44-45, Zusammenfassung Nr. 165160d, COLUMBUS OHIO (US)**

(73) Patentinhaber: **Vianova Kunstharz Aktiengesellschaft, A-8402 Werndorf (AT)**

(72) Erfinder: **Wilfinger, Werner, Dr., Händelstrasse 52, A-8042 Graz (AT)**
Erfinder: **Tulacs, Laszlo, Dipl.- Ing., Münzgrabengürtel 26, A8010 Graz (AT)**
Erfinder: **Hiden, Johann, Corneliusweg 18, A-8051 Graz (AT)**

## Beschreibung

Die vorliegende Erfindung betrifft wärmehärtbare Acrylatbindemittel, das Verfahren zu ihrer Herstellung und ihre Verwendung in Einbrennlacken.

Auf dem Gebiet der industriellen Lackierung, wie bei der Serienlackierung von Automobilen, Haushaltsgeräten, Stahlmöbeln u. a. werden selbstvernetzende oder fremdvernetzende wärmehärtbare Acrylharzbindemittel in großem Umfang eingesetzt. Als Härtungskomponente für fremdvernetzende Bindemittel dienen dabei vor allem Aminoharze, Epoxidharze und Polyisocyanate.

Solche Acrylharze sind in großer Zahl aus der Literatur bekannt. Eine ausführliche Darstellung über Herstellung, Aufbau, Eigenschaften und Anwendung dieser Produktgruppe wird beispielsweise in dem Buch von H. Rauch-Puntigam / Th. Völker, "Acryl- und Methacrylverbindungen" Springer-Verlag, Berlin-Heidelberg-New York 1967 oder in Ullmanns Encyklopädie der technischen Chemie, 4. Auflage, Band 15, im Kapitel "Lacke" gegeben.

Der übliche Weg zur Herstellung eines Acrylharzes besteht in der radikalischen Polymerisation chemisch verschiedener Monomerer, welche entsprechend den jeweiligen Erfordernissen für das Endprodukt ausgewählt werden.

Der Nachteil dieses Prinzips ist jedoch, daß es dabei fast unmöglich ist, eine optimale Kombination von gegenläufigen Filmeigenschaften, wie sie von der Praxis gefordert werden, in einem Copolymerisat zu vereinigen. Solche gegenläufigen Eigenschaftskombinationen sind z. B. Härte-Elastizität, Chemikalienfestigkeit-Flexibilität, Haftung auf Metallsubstraten - Wasserfestigkeit u. a. Gemäß ihren Polymerisationsparametern ordnen sich die verschiedenen Monomeren mehr oder weniger statistisch in der Molekülkette an, was zu einem näherungsweisen linearen Beitrag der beteiligten Monomeren zu den Eigenschaften des Copolymerisats führt. Dieses Bild wird auch beim Versuch einer blockweisen Anordnung der Monomeren nur unwesentlich verändert.

Der gezeigte Nachteil kann in manchen Fällen durch Mischung von zwei oder mehr Copolymerisaten überwunden werden, doch ist dieser Weg meist durch eine mangelnde Verträglichkeit der Komponenten, untereinander versperrt.

So werden beispielsweise in der US-PS 3 623 205 Mischungen von zwei thermoplastischen Acrylcopolymeren, deren Glasübergangstemperaturen um mindestens 30° C differieren beschrieben. Wie in der Patentschrift angegeben wird, neigen diese Mischungen zur Separation, welche nur durch Erhöhung des Lösungsmittelgehalts oder durch Herabsetzung des Molekulargewichtes der Copolymerisate überwunden werden kann Da diese Mischungen nur eine "Grenzverträglichkeit" aufweisen, bilden sie auch im Film zwei diskret verschiedene Phasen.

In der GB-PS 2 074 588 A werden dagegen Mischungen aus zwei Acrylpolymeren mit unterschiedlichen Molekulargewichten und einem alkylierten Melaminharz zur Formulierung von Lackbindemitteln mit hohem Festkörpergehalt beschrieben. Auch in diesem Fall ergeben sich naturgemäß ähnliche Verträglichkeitsprobleme, welche durch Zugabe von Polyhydroxylverbindungen, wie Polyalkohole oder niedermolekulare Polyester überwunden werden sollen. Diese als überbrückende Lösungsmittel wirkenden niedermolekularen Substanzen tragen natürlich nicht zu einer Verbesserung der eingebrannten Filme bei.

Ein anderer Weg zur Überwindung der genannten Schwierigkeiten besteht in der Pfropfpolymerisation von Vinylcopolymeren auf Polyesterpolymere, wobei sich solche Produkte, wie sie beispielsweise in der US-PS 4 151 227 beschrieben sind, durch eine besondere Flexibilität auszeichnen sollen. Abgesehen davon, daß damit verseifbare Schwachstellen in das Harz eingebaut werden, ist auch dadurch nicht der gewünschte Effekt erzielbar, da diese Reaktion unter Molekülvergrößerung abläuft und damit wieder andere Parameter nachteilig beeinflußt werden.

Ähnliches gilt auch für das in der GB-PS 2 048 282 A beschriebene Verfahren, bei welchem eine Copolymerisation eines an sich unverträglichen Celluloseacetobutyrates mit den Acrylmonomeren erfolgt.

Kombinationen von Acryl-copolymeren liegen auch in den so genannten "Nichtwäßrigen Dispersionen" (auch als "non-aqueous dispersion" oder abgekürzt als "NAD" bezeichnet) vor. Bei diesen Produkten wird ein Lösungspolymerisat, d. h., ein in dem als Reaktionsmedium dienenden organischen Lösungsmittel <u>lösliches</u> Copolymer hergestellt, welches im weiteren als Stabilisierungsmittel für die in diesem Reaktionsmedium <u>unlöslichen</u> Dispersionsteilchen dienen, welche durch radikalische Polymerisation in diesem Medium hergestellt werden. Über diese Bindemittelgruppe besteht eine umfangreiche Literatur, von welcher beispielsweise das Buch "Dispersion Polymerisation in Organic Media", von K.E.J. Barrett, J. Wiley + Sons, London 1975 genannt wird, in dem die Grundlagen für diese Bindemittel referiert werden.

Von bereits früher veröffentlichten Patenten seien die DE-OS 1 669 090 und die DES 1 669 091 genannt, wobei hierin einem im organischen Lösungsmittel weitgehend löslichen und dispergierend wirkenden Copolymerisat und/oder Polykondensat ein weitgehend unlösliches dispergiertes zweites Copolymerisat hergestellt wird. Beide Copolymere weisen veretherte Methylolamidgruppen auf, wodurch sie selbstvernetzende Eigenschaften erhalten und im Gegensatz zu anderen nichtwäßrigen Dispersionen nicht unbedingt ein weiteres Vernetzungsmittel benötigen.

Aufgrund der Aufgabenstellung für das Lösungspolymerisat als Dispergiermittel zur Stabilisierung der dispergierten unlöslichen Teilchen ist dieser Teil des Bindemittels sowohl bezüglich seiner Zusammensetzung als auch bezüglich seiner Menge im Bindemittelsystem starken Einschränkungen unterworfen. Es ist klar, daß für die angestrebte Stabilisator wirkung eine ganz spezifische Monomerenauswahl getroffen werden muß und

2

EP 0 095 627 B1

aufgrund dessen, dieser Anteil nur in untergeordnetem Ausmaß zu einer Optimierung der Filmeigenschaften herangezogen werden kann.

Es wurde nun gefunden, daß Bindemittel auf Basis von Lösungen von Acrylcopolymeren in organischen Lösungsmitteln den gestellten Ansprüchen bezüglich optimaler Kompromißlösunggen bei der Kombination gegenläufiger Filmeigenschaften entsprechen, wenn die Polymerenlösung in der weise hergestellt wird, daß mindestens eine der Mischungskomponenten in Gegenwart der weiteren Komponenten hergestellt wird, wobei eine Verknüpfung der einzelnen Lösungspolymerisate möglichst vermieden werden soll.

Die vorliegende Erfindung betrifft demgemäß wärmehärtbare selbstvernetzende oder fremdvernetzende Acrylatbindemittellösungen in organischen Lösungsmitteln, und ein Verfahren zur Herstellung diese Lösungen, welches dadurch gekennzeichnet ist, daß man in einer ersten Stufe die Monomeren für eine erste Copolymerlösung (A) in üblicher Weise durch radikalische Polymerisation in organischen Lösungsmitteln bis zu einem Polymerisationsumsatz von über 90 % polymerisiert und anschließend in der erhaltenen Polymerlösung in einer zweiten Stufe eine weitere Polymerlösung aus den für das Copolymer (B) vorgesehenen Monomeren durch radikalische Polymerisation herstelt, wobei die Auswahl der Monomeren für die einzelnen Polymerkomponenten so getroffen wird, daß diese bezüglich ihrer Monomerenzusammensetzung und/oder ihres Molekulargewichtes bzw. ihrer Grenzviskositätswerte und/oder ihrer Löslichkeitsparameter und/oder ihrer Glasübergangstemperatur soweit unterschiedlich sind, daß sie eine Unverträglichkeit in dem Sinne aufweisen, daß im Falle einer getrennten Herstellung der Komponenten deren Mischungen ein Zweiphasensystem ausbilden.

Diese Bindemittel ziegen überraschenderweise einen wesentlich erweiterten Verträglichkeitsbereich gegenüber den in üblicher Wiese gemischten Komponenten gleicher Zusammensetzung, ohne daß die Produkte einen höhere Viskosität aufweisen. Auf diese Wiese ist es möglich, Copolymere mit wesentlich verschiedener Charakteristik in einer Kombination zu vereinen, ohne daß sich verarbeitungsmäßige Schwierigkeiten, wie Phasentrennung, erhöhter Lösungsmittelbedarf oder Unverträglichkeit im Lackfilm ergeben.

Gegenüber Lackbindemitteln auf der Basis von nichwäßrigen Dispersionen ist durch das erfindungsgemäße Verfahren eine wesentlich größere Freiheit bezüglich der Art der Monomeren bzw. der Menge der Komponenten und der Reihenfolge der Herstellung der einzelnen Teilkomponenten gegeben. Als wesentliches Auswahlkriterium steht somit die optimale Erzielung der gewünschten Filmeigenschaften im Vordergrund.

Das Verfahren ist weiters dadurch gekennzeichnet, daß in der auf diese Weise erhaltenen Lösung der Copolymere (C) usw. in analoger Weise copolymerisiert werden.

Zur Erzielung der gewünschten Filmeigenschaften sollen sich die Copolymeren (A), (B), (C) usw. durch die Auswahl der Monomeren und/oder durch die Mengenverhätlnisse dieser Monomeren und/oder das Molekulargewicht bzw. Grenzviskositätszahl der Copolymeren unterscheiden. Weitere Variationsmöglichkeiten bestehen in der Auswahl der Mengenverhältnisse der gebildeten Copolymeren untereinander bzw. in der Wahl der Reihenfolge bei der Herstellung der Copolymeren sowie durch die Auswahl der Löslichkeitsparameter oder der Glasübergangstemperatur. Da die verschiedenen Variationen verschiedene Auswirkungen aruf das Ausmaß der Einflüsse hat, ist für eine bestimmte Problemstellung, vor allem bei komplizierten Zusammensetzungen, eine Vorhersage der Eigenschaften des Endprodukts nur bei Vorliegen von Versuchsmaterial möglich. Eine weitere Möglichkeit zur Variation der Bindemitteleigenschaften besteht darin, die Polymerisation der ersten oder einer der weiteren Komponenten in Gegenwart anderer, im wesentlichen unter den Reaktionsbedingungen inerten Lackbindemitteln, wie Cellulosederivaten oder gesättigten Polyesterharzen durchzuführen.

Die Mengenverhältnisse zwischen den Acrylcopolymeren können in weiten Grenzen variiert werden und können bei zwei Komponenten zwischen 10 : 90 und 90 : 10 liegen. Bei einem Verfahren mit mehr als zwei Komponenten gilt dieses Verhältnis für die Mengen der vorgelegten Polymerlösung und der jeweils darin hergestellten weiteren Polymerlösung.

Das erfindungsgemäße Verfahren wird besonders dann vorteilhaft eingesetzt, wenn sich die Copolymeren (A) und (B) in ihren Parametern soweit unterscheiden, daß sie, gesondert hergestellt und miteinander im entsprechenden Verhältnis gemischt, ein Zweiphasensystem im Sinne einer Unverträglichkeit ausbilden. Die erfindungsgemäß hergestellte Kombination erscheint dann im Gegensatz dazu makroskopisch und lichtmikroskopisch einphasig und damit verträglich, was sich auch in der einwandfreien Filmbildung dokumentiert.

Durch das erfindungsgemäße Verfahren lassen sich Copolymerkombinationen erzielen, wie sie bei einem Einstufenverfahren durch einen Auswahl bei der Monomerenzusammensetzung nicht realisierbar sind. Dies betrifft insbesonders Fälle, wo von einem Bindemittel bis zu einem gewissen Grad antagonistische Filmeigenschaften gefordert werden. Gegebenenfalls können auch spezifische funktionelle Gruppen auf eine der Komponenten konzentriert werden, womit z. B. bei Härtungsvorgängen besonders günstige Voraussetzungen geschaffen werden können.

In einer weiteren Rusführungsform kann auch in untergeordnetem Ausmaß bei der Polymerisation eine Verknüpfung der beiden Copolymeren (A) und (B) angestrebt werden. In diesem Fall werden z. B. in einer Zwischenstufe in das fertige Copolymer (A) ungesättigte Funktionen in geringem Ausmaß eingebaut, sodaß im Endprodukt untergeordnete Mengen, d. h. etwa 0,1 - 5 Mol-% eines Copolymerisats (AB) vorliegen. Die Einführung dieser funktionellen Gruppen kann beispielsweise durch Reaktion von Carboxylgruppen mit einem Glycidylacrylat erfolgen. Eine wesentliche Erhöhung des mittleren Molekulargewichts soll mit dieser

3

Maßnahme jedoch nicht verbunden sein, da sonst der durch die vorliegende Erfindung erzielbare Effekt in Frage gestellt ist.

Die Methoden der radikalischen Polymerisation sind dem Fachmann bekannt und benötigen keine nähere Beschreibung. Das gleiche gilt auch für die Auswahl der Monomeren für die Copolymerkomponenten. Die Monomerenzusammensetzung liegt - unter der obengenannten Voraussetzung einer anzustrebenden Unverträglichkeit - vorteilhafterweise in den folgenden Grenzen:

| | |
|---|---|
| α,β-äthylenisch ungesättigte Säure | 0 - 6 Gew.-% |
| (Meth)acrylsäurealkylester | 15 - 95 Gew.-% |
| (Meth)acrylsäurehydroxyalkylester | 5 - 40 Gew.-% |
| (Meth)acrylamid oder dessen gegebenenfalls mit Alkanolen verätherte Formaldehydanlagerungsprodukte | 0 - 40 Gew.-% |
| andere Monomere wie Vinylaromaten oder Acrylnitril | 0 - 45 Gew.-% |

Die Polymerisation erfolgt in Lösungsmitteln, in welchen die Copolymeren bzw. die Copolymerenkombination einwandfrei löslich sind. Bei der Polymerisation wird eine möglichst enge Molekulargewichtsverteilung angestrebt, wie dies z. B. nach dem Verfahren der AT-PS 367 436 möglich ist; diese Forderung ist jedoch nicht erfindungswesentlich.

Die vorliegende Erfindung betrifft weiters die Verwendung der wärmehärtbaren Bindemittel, gegebenenfalls in Kombination mit Härtungskomponenten wie Aminoharzen, Phenolharzen, Epoxidharzen oder Polyisocyanaten und den üblichen Katalysatoren, Lösungs- und Lackhilfsmitteln sowie gegebenenfalls Pigmenten und Füllstoffen in Einbrennlacken. Die Formulierung, Herstellung und Anwendung von Einbrennlacken erfolgt in üblicher Weise und kann von einem Fachmann ohne weitere Angaben erfolgen.

Die folgenden Beispiele erläutern die Erfindung ohne sie in ihrem Umfang zu beschränken. Alle Mengen und Prozentangaben beziehen sich auf Gewichtseinheiten.

## Beispiel 1: Herstellung des Copolymerisates A

In einem mit Rührer, Thermometer und Inertgaseinleitung ausgestattetem Reaktionsgefäß werden 40 Teile Äthoxyäthylacetat auf eine Reaktionstemperatur von 130°C gebracht. Eine Mischung, bestehend aus 2 Teilen Acrylsäure, 20 Teilen Hydroxyäthylmethacrylat, 41 Teilen Styrol und 37 Teilen n-Butylacrylat wird parallel mit einer Mischung von 1,5 Teilen Di-tert.Butylperoxid (verdünnt mit 10 Teilen Äthoxyäthylacetat) so zugegeben, daß immer ein Polymerisations umsatz von 100 %, mindestens jedoch von 90 % gegeben ist. Die Kontrolle des Polymerisationsumsatzes erfolgt stündlich durch Festkörperbestimmung.

Die Steuerung zur Erzielung der Molekulargewichte, ausgedrückt in Grenzviskositätszahlen, erfolgt durch Regulierung der Reaktionstemperatur zwischen 128 und 135°C, wobei durch eine Temperaturerhöhung eine Erniedrigung dar Grenzviskositäts zahl bewirkt wird. Das Copolymerisat A besitzt einen Festkörpergehalt von 66,6 %, eine Säurezahl von 15, 6 mg KOH/g eine berechnete Hydroxylzahl von 86,3 mg KOH/g eine Grenzviskositätszahl von 18,1 ml/g (gemessen in Chloroform, 20°C) und eine Glasübergangstemperatur von 16,7°C.

## Herstellung des Copolymerisats B im Schoße des Copolymerisates A

Zu diesem Copolymerisat A werden nun 4 Teile Äthoxyäthylacetat und 42 Teile eines Lösungsmittels mit mindestens 98 Vol-% Aromatengehalt (ASTM D-1319) , einem Siedebereich von 160 - 182°C (ASTM D-1078/87), einem Flammpunkt ,von 42,8°C (Abel-Pensky) zugesetzt und die Reaktionstemperatur auf 142°C gesteigert. Eine Mischung, bestehend aus 2 Teilen Acrylsäure, 22 Teilen Hydroxyathylacrylat, 76 Teilen Äthylacrylat und 0,5 Teilen tert. Dodecylmerkaptan wird parallel mit einer Mischung von 2 Teilen Di-tert.Butylperoxid (verdünnt mit 10 Teilen Lösungsmittel A) so zugegeben, daß immer ein Polymerisationsumsatz von 100 %, mindestens jedoch von 90 % gegeben ist. Die Kontrolle des Polymerisationsumsatzes erfolgt stündlich durch Festkörperbestimmung.

Das resultierende Copolymerisat (Copolymerisat B im Schoße von Copolymerisat A hergestellt) besitzt einen Festkörpergehalt von 67,7 %, eine Säurezahl von 16,0 mg KOH/g, eine berechnete Gesamthydroxylzahl von 96,4 mg KOH/g äquivalent und eine Grenzviskositätszahl von 12,4 ml/g (gemessen in Chloroform, 20°C).

## Vergleichsbeispiel 1:

Herstellung des Copolymerisates A:
Das Copolymerisat A wird gleich wie in Beispiel 1 beschrieben hergestellt.
Herstellung des Copolymerisates B:

In einem mit Rührer, Thermometer und Inertgaseinleitung ausgestattetem Reaktionsgefäß werden 42 Teile des Lösungsmittels A auf eine Reaktionstemperatur von 142°C gebracht. Eine Mischung, bestehend aus 2 Teilen Acrylsäure, 22 Teilen Hydroxyäthylacrylat, 76 Teilen Äthylacrylat und 0,5 Teilen tert.Dodecylmerkaptan wird parallel mit einer Mischung von 2 Teilen Di-tert.Butylperoxid (verdünnt mit 10 Teilen Lösungsmittel A) so zugegeben, daß immer ein Polymerisationsumsatz von 100 %, mindestens jedoch von 90 % gegeben ist. Die Kontrolle des Polymerisationsumsatzes erfolgt stündlich durch Festkörperbestimmung.

Das resultierende Copolymerisat besitzt einen Festkörpergehalt von 65,7 %, eine Säurezahl von 15,8 mg KOH/g, eine berechnete Hydroxylzahl von 106,4 mg KOH/g äquivalent, eine Grenzviskositätszahl von 8,9 ml/g (gemessen in Chloroform, 20°C) und eine Glasübergangstemperatur von -22,2°C.

Wird nun das Copolymerisat A (nach Vergleichsbeispiel) mit dem Copolymerisat B (nach Vergleichsbeispiel) im Verhältnis 1 : 1 (bezogen auf Festkörpergehalt) gemischt, so weist die Mischung eine starke Trübung auf. Bei längerem Stehenlassen tritt eine teilweise Entmischung der einzelnen Komponenten auf, sodaß diese Copolymerisatkombination für einen anwendungstechnischen Prüfversuch ungeeignet ist.

### Beispiel 2: Herstellung des Copolymerisates C

Analog dem Copolymerisat A aus Beispiel 1 wird ein Copolymerisat, bestehend aus 20 Teilen Hydroxyäthylmethacrylat, 2 Teilen Acrylsäure, 41 Teilen Styrol, 37 Teilen n-Butylacrylat, geregelt mit 0,8 Teilen tert. Dodecylmerkaptan und mit gleicher Initiatormenge in Äthoxyäthylacetat bei einer Reaktionstemperatur von 145 - 148°C hergestellt.

Das Copolymerisat besitzt einen Festkörpergehalt von 65 %, eine Säurezahl von 16,2 mg KOH/g, eine berechnete Hydroxylzahl von 86,3 mg KOH/g, eine Glasübergangstemperatur von 16,7°C und eine Grenzviskositätszahl von 9,5 ml/g (gemessen in Chloroform, 20°C).

### Herstellung- des Copolymerisates D im Schoße des Copolymerisates C

Zum Copolymerisat C werden nun 30 Teile Lösungsmittel A zugesetzt und bei einer Reaktionstemperatur von 128 - 130°C eine Mischung, bestehend aus 2 Teilen Acrylsäure, 22 Teilen Hydroxyäthylacrylat und 76 Teilen Äthylacrylat parallel mit einer Mischung von 0,7 Teilen Di-tert.Butylperoxid (verdünnt mit C Teilen Lösungsmittel A) wie in Beispiel 1, Copolymerisat B beschrieben, zugegeben und die Polymerisation in dieser Weise zu Ende geführt.

Das resultierende Copolymerisat (Copolymerisat D im Schoße von Copolymerisat C hergestellt) besitzt einen Festkörpergehalt von 68,0 %, eine Säurezahl von 16,3 mg KOH/g, eine berechnete Gesamthydroxylzahl von 96,4 mg KOH/g und eine Grenzviskositätszahl von 13,4 ml/g (gemessen in Chloroform, 20°C).

### Vergleichsbeispiel 2:

Herstellung des Copolymerisates C
Das Copolymerisat C wird wie in Beispiel 2 beschrieben, hergestellt.
Herstellung des Copolymerisates D
In einem mit Rührer, Thermometer und Inertgaseinleitung ausgestattetem Reaktionsgefäß werden 30 Teile Lösungsmittel A auf eine Reaktionstemperatur von 128 - 130°C gebracht. Eine Mischung, bestehend aus 2 Teilen Acrylsäure, 22 Teilen Hydroxyäthylacrylat und 76 Teilen Äthylacrylat wird parallel mit einer Mischung von 0,8 Teilen Di-tert.Butylperoxid (verdünnt mit 10 Teilen Lösungsmittel A) so zugegeben, daß immer ein Polymerisationsumsatz von 100 %, mindestens jedoch von 90 % gegeben ist. Das resultierende-Copolymerisat besitzt einen Festkörpergehalt von 71,4 %, eine Säurezahl von 16,5 mg KOH/g, eine Grenzviskositätszahl von 15,6 ml/g (gemessen in Chloroform, 20°C) und eine Glasübergangstemperatur von -22°C.

Wird nun das Copolymerisat nach Vergleichsbeispiel C mit dem Copolymerisat nach Vergleichsbeispiel D im Verhältnis 1 : 1 (bezogen auf Festkörpergehalt) gemischt, so weist die Mischung eine starke Trübung auf. Bei längerem Stehenlassen tritt eine totale Entmischung der einzelnen Komponenten auf, sodaß diese Copolymerkombination für einen anwendungstechnischen Prüfversuch ungeeignet ist.

### Beispiel 3: Herstellung des Copolymerisates E

In einem mit Rührer, Themometer und Inertgaseinleitung ausgestattetem Reaktionsgefäß werden 30 Teile Äthoxyäthylacetat auf eine Reaktionstemperatur von 128 - 130°C gebracht. Eine Mischung bestehend aus 2 Teilen Acrylsäure, 22 Teilen Hydroxyäthylacrylat und 76 Teilen Äthylacrylat wird parallel mit einer Mischung von 0,8 Teilen Di-tert.Butylperoxid (verdünnt mit 10 Teilen Äthoxyäthylacetat) so zugegeben, daß immer ein Polymerisationsumsatz von 100 %, mindestens jedoch von 90 % gegeben ist.

Das resultierende Copolymerisat besitzt einen Festkörpergehalt von 71,4 %, eine Säurezahl von 18,4 mg KOH/g eine Glasübergangstemperatur von - 22,2°C und eine Grenzviskositätszahl von 17,5 ml/g (gemessen in Chloroform, 20°C).

**Herstellung des Copolymerisates F im Schoße des Copolymerisates E**

Zum Copolymerisat E werden nun 14 Teile Äthoxyäthylacetat und 42 Teile Lösungsmittel A zugesetzt und auf eine Reaktionstemperatur von 145 - 148°C gebracht. Eine Mischung, wie in Beispiel 1, Copolymerisat A beschrieben, wird zugegeben und die Polymerisation in gleicher Weise zu Ende geführt.

Das resultierende Copolymerisat (Copolymerisat F im Schoße von Copolymerisat E hergestellt) besitzt einen Festkörpergehalt von 65,3 %, eine Säurezahl von 17 mg KOH/g, eine berechnete Gesamthydroxylzahl von 96,4 mg KOH/g und eine Grenzviskositätszahl von 15,2 ml/g (gemessen in Chloroform, 20°C).

**Vergleichsbeispiel 3: Herstellung des Copolymerisates E**

Das Copolymerisat E wird wie in Beispiel 3 beschrieben hergestellt.
Herstellung des Copolymerisates F
42 Teile Lösungsmittel A werden auf eine Reaktionstemperatur von 146 - 148°C gebracht. Eine Mischung bestehend aus 2 Teilen Acrylsäure, 20 Teilen Hydroxyäthylmethacrylat, 41 Teilen Styrol, 37 Teilen n-Butylacrylat, 0,8 Teilen tert.Dodecylmerkaptan werden mit einer Mischung von 2 Teilen Di-tert.Butylperoxid (verdünnt mit 10 Teilen Lösungsmittel A) so zugegeben, daß immer ein Polymerisationsumsatz von 100 %, mindestens jedoch 90 % gegeben ist. Das Copolymerisat F besitzt einen Festkörpergehalt von 65,8 %, eine Säurezahl von 17,1 mg KOH/g, eine Glasübergangstemperatur von +16,7°C, eine berechnete Hydroxylzahl von 86,3 mg KOH/g, und eine Grenzviskositätszahl von 8,8 ml/g (gemessen in Chloroform, 20°C).

Wird nun das Vergleichsbeispiel E mit Vergleichsbeispiel F im Verhältnis 1 : 1 (bezogen auf Festkörpergehalt) gemischt so weist die Mischung eine starke Trübung auf. Bei längerem Stehenlassen ist eine totale Entmischung der einzelnen Copolymerisatkomponenten zu beobachten, sodaß eine anwendungstechnische Prüfung nicht durchgeführt werden kann.

**Beispiel 4: Herstellung des Copolymerisates G**

42 Teile Äthoxyäthylacetat werden auf eine Reaktionstemperatur von 132 - 135°C gebracht. Eine Mischung bestehend aus 2 Teilen Acrylsäure, 22 Teilen Hydroxyäthylacrylat, 76 Teilen Äthylacrylat und 0,5 Teilen tert.Dodecylmerkaptan werden mit einer Mischung von 2 Teilen Di-tert.Butylperoxid (verdünnt mit 10 Teilen Äthoxyäthylacetat) parallel so zugegeben, daß immer ein Polymerisationsumsatz von 100 %, mindestens jedoch 90 % gegeben ist. Das so hergestellte Copolymerisat besitzt einen Festkörpergehalt von 65,7 %, eine Säurezahl von 18,1 mg KOH/g, eine berechnete Hydroxylzahl von 106,4 mg KOH/g, eine Glasübergangstemperatur von -22,2°C und eine Grenzviskositätszahl von 8,2 ml/g (gemessen in Chloroform, 20°C).

**Herstellung des Copolymerisates H im Schoße des Copolymerisates G**

Zum Copolymerisat G werden nun 30 Teile Lösungsmittel A zugesetzt und auf eine Reaktionstemperatur von 130 - 133°C gebracht. Eine Mischung, bestehend aus 20 Teilen Hydroxyäthylmethacrylat, 2 Teilen Acrylsäure, 41 Teilen Styrol und 37 Teilen n-Butylacrylat wird parallel mit einer Mischung von 1 Teil Di-tert.Butylperoxid (verdünnt mit 10 Teilen Lösungsmittel A) so zugegeben, daß immer ein Polymerisationsumsatz von 100 %, mindestens jedoch 90 %, gegeben ist. Das resultierende Copoylmerisat (Copolymerisat H im Schoße von Copolymerisat G hergestellt) besitzt einen Festkörpergehalt von 68,5 %, eine Säurezahl von 18,2 mg KOH/g, eine berechnete Gesamthydroxylzahl von 96,4 mg KOH/g und eine Grenzviskositätszahl von 12,5 ml/g (gemessen in Chloroform, 20°C).

**Vergleichsbeispiel 4: Herstellung des Copolymerisates G**

Das Copolymerisat G wird wie in Beispiel 4 beschrieben hergestellt.

Herstellung des Copolymerisates H

42 Teile Lösungsmittel A werden auf eine Reaktionstemperatur von 125 - 128°C gebracht. Eine Mischung, bestehend aus 2 Teilen Acrylsäure, 20 Teilen Methacrylsäurehydroxyäthylester, 41 Teilen Styrol und 37 Teilen n-Butylacrylat werden mit einer Mischung von 1,5 Teilen Di-tert.Butylperoxid (verdünnt mit 10 Teilen Lösungsmittel A) so zugegeben, daß immer ein Polymerisationsumsatz von 100 %, mindestens jedoch 90 % gegeben ist. Das Copolymerisat H besitzt einen Festkörper von 65,8 %, eine Säurezahl von 16,0 mg KOH/g, eine berechnete Hydroxylzahl von 86,3 mg KOH/g, eine Glasübergangstemperatur von 16,7°C und eine Grenzviskositätszahl von 16,9 ml/g (gemessen in Chloroform, 20°C).

Wird nun das Copoylmerisat G mit dem Copolymerisat H im Verhältnis 1 : 1 (bezogen auf Festkörpergehalt) gemischt, so weist die Mischung eine starke Trübung auf.

**Anwendungstechnische Beispiele:**

Mit der im folgenden beschriebenen Acrylharzkomponente wurden folgende Weißlacke hergestellt (Feststoffverhältnisse):

Acrylharz ex Beispiel : Melaminharz[1] = 80 : 20
Pigment ($TiO_2$-Rutil): Bindemittel 67 : 100
Verdünnungsmittel: Benzolkohlenwasserstoff (Siedebereich: 135 - 170°C)
Applikationsviskosität: ca. 23 s (DIN 53 211)
Substrat Stahlblech (0,8 mm)
Einbrenntemperatur: 25 min, 150°C

1) Mittelreaktives, methanolveräthertes Melamin-Formaldehydharz, 75 %-ig in Isobutanol

| Acrylharz-Beispiel | Glanz, 20° (DIN 67 530) | Pendelhärte (DIN 53 157) | Lösungs-[2] mittelbe- ständigkeit |
|---|---|---|---|
| Beispiel 1 | 79 % | 103 s | 7 min. |
| Vergl.Beispiel 1 | unverträgl. vollmatt | - | - |
| Beispiel 2 | 79 % | 126 s | 9 min. |
| Vergl.Beispiel 2 | unverträgl. vollmatt | - | - |
| Beispiel 3 | 78 % | 100 s | 10 min. |
| Vergl.Beispiel 3 | unverträgl. vollmatt | - | - |
| Beispiel 4 | 81 % | 93 s | 6 min. |
| Vergl.Beispiel 4 | unverträgl. vollmatt | - | - |

2) Wattebausch, getränkt mit Benzolkohlenwasserstoff (Siedebereich 145 - 170°C), wird auf Lackfilm gelegt. Bestimmt wird die Zeit, nach der der Lackfilm infolge Erweichung mit dem Fingernagel durchgekratzt werden kann.

Während keines der durch Mischung hergestellten Vergleichs beispiele verträglich ist, weisen alle analog zusammengesetzten, erfindungsgemäß hergestellten Beispiele einen sehr guten Glanz auf. Die Zusammensetzung der vier erfindungsgemäßen Beispiele ist gleich, die Unterschiede in der Pendelhärte und im Glanz resultieren einerseits aus der verschiedenen Reihenfolge der Herstellung, andererseits aus dem unterschiedlichen Molekulargewicht der jeweiligen beiden Harzkomponenten.

**Patentansprüche**

1. Wärmehärtbare selbstvernetzende oder fremdvernetzende Acrylatbindemittellösungen in organischen Lösungsmitteln, dadurch gekennzeichnet, daß die Bindemittel durch eine zweistufige radikalische Polymerisation erhalten wurden, wobei in einer ersten Stufe die Monomeren für eine erste Copolymerlösung (A) in üblicher Weise durch radikalische Polymerisation in organischen Lösungsmitteln bis zu einem Polymerisationsumsatz von über 90 % polymerisiert wurden und anschließend in der erhaltenen Polymerlösung in einer zweiten Stufe eine weitere Polymerlösung aus den für das Copolymer (B) vorgesehenen Monomeren

7

durch radikalische Polymerisation hergestellt wurde, mit der Maßgabe, daß die Auswahl der Monomeren für die einzelnen Polymerkomponenten so getroffen wird, daß diese bezüglich ihrer Monomerenzusammensetzung und/oder ihres Molekulärgewichtes bzw. ihrer Grenzviskositätswerte und/oder ihrer Löslichkeitsparameter und/oder ihrer Glasübergangstemperatur soweit unterschiedlich sind, daß sie eine Unverträglichkeit in dem Sinne aufweisen, daß im Falle einer getrennten Herstellung der Komponenten deren Mischungen ein Zweiphasensystem ausbilden.

2. Wärmehärtbare Acrylatbindemittellösungen nach Anspruch 1, dadurch gekennzeichnet, daß 0,1 bis 5 % der Copolymeren in einer über funktionelle Gruppen verknüpften Form vorliegen.

3. Verfahren zur Herstellung von wärmehärtbaren selbstvernetzenden oder fremdvernetzenden Acrylatbindemittellösungen in organischen Lösungsmitteln, dadurch gekennzeichnet, daß man in einer ersten Stufe die Monomeren für eine erste Copolymerlösung (A) in üblicher Weise durch radikalische Polymerisation in organischen Lösungsmitteln bis zu einem Polymerisationsumsatz von über 90 % polymerisiert und anschließend in der erhaltenen Polymerlösung in einer zweiten Stufe eine weitere Polymerlösung aus den für das Copolymer (B) vorgesehenen Monomeren durch radikalische Polymerisation herstellt, wobei die Auswahl der Monomeren für die einzelnen Polymerkomponenten so getroffen wird, daß diese bezüglich ihrer Monomerenzusammensetzung und/oder ihres Molekulargewichtes bzw. ihrer Genzviskositätswerte und/oder ihrer Löslichkeitsparameter und/oder ihrer Glasübergangstemperatur soweit unterschiedlich sind, daß sie eine Unverträglichkeit in dem Sinne aufweisen, daß im Falle einer getrennten Herstellung der Komponenten deren Mischungen ein Zweiphasensystem ausbilden.

4. Verfahren nach Anspruch 3, dadurch gekennzeichnet, daß in einer Lösung der Copolymerisate (A) und (B) eine oder mehrere weitere Copolymerlösungen in analoger Weise hergestellt werden.

5. Verfahren nach den Ansprüchen 3 und 4, dadurch gekennzeichnet, daß zwei oder mehrere der Copolymerkomponenten zu einem Anteil von 0,1 bis 5 % durch funktionelle Gruppen im Verlauf der Herstellung chemisch miteinander verbunden werden.

6. Verfahren nach den Ansprüchen 3 bis 5, dadurch gekennzeichnet, daß die Mengenverhältnisse zwischen der vorgelegten Copolymerlösung und der darin hergestellten Polymerlösung zwischen 10 : 90 und 90 : 10 liegen.

7. Verwendung der wärmehärtbaren Acrylatbindemittellösungen gemäß den vorhergehenden Ansprüchen, gegebenenfalls in Kombination mit Härtungskomponenten, Katalysatoren, Lösungs- und Lackhilfsmitteln, sowie gegebenenfalls Pigmenten und Füllstoffen in Einbrennlacken.

## Claims

1. Heat hardenable acrylate binder solutions, self-cross-linking or cross-linking with cross-linkers, characterized in that the binders were obtained in a two-step free-radical polymerisation, whereby in a first step the monomers were polymerised for a first copolymer solution (A) in normal way through free-radical polymerisation in organic solvents to a degree of conversion of over 90 % and, subsequently, in the obtained polymer solution, in a second step, a further polymer solution was prepared from the monomers foreseen for copolymer (B) through free-radical polymerisation, under the condition that the monomers for the two polymer components are chosen such that, with regard to their monomer composition and/or their molecular weight and their intrinsic viscosity and/or their solubility parameters and/or their glass transition temperature they differ to a degree such that, if the components are prepared separately, their mixtures form a two-phase system.

2. Heat hardenable acrylate binder solutions according to claim 1, characterized in that 0.1 to 5 % of the copolymers are present in a form linked via functional groups.

3. Process for producing heat hardenable acrylate binders self-cross-linking or cross-linking with cross-linkers, characterized in that the binders are obtained in a two-step free-radical polymerisation, whereby in a first step the monomers are polymerised for a first copolymer solution (A) in normal way through free-radical polymerisation in organic solvents to a degree of conversion of over 90 % and, subsequently, in the obtained polymer solution, in a second step, a further polymer solution is prepared from the monomers foreseen for copolymer (B) through free-radical polymerisation, under the condition that the monomers for the two polymer components are chosen such that, with regard to their monomer composition and/or their molecular weight and their intrinsic viscosity and/or their solubility parameters and/or their glass transition temperature they differ to a degree such that, if the components are prepared separately, their mixtures form a two-phase system.

4. Process according to claim 3, characterized in that in a solution of the copolymers (A) and (B) one or more further copolymer solutions are prepared in an analogous way.

5. Process according to claims 3 and 4, characterized in that two or more copolymer components are chemically linked in the course of their production through functional groups to an extent of from 0.1 to 5 %.

6. Process according to claims 3 to 5, characterized in that the weight ratios between the precharged polymer solution and the polymer solutions prepared therein range between 10 : 90 and 90 : 10.

7. Use of the heat hardenable acrylate binder solutions according to the preceding claims in stoving paints, optionally in combination with hardening components, catalysts, solvents and paint additives and, optionally, pigments and extenders.

## EP 0 095 627 B1

**Revendications**

1. Solution de liants acryliques thermodurcissables autoréticulants ou à reticulation étrangère dans des solvants organiques caractérisées en ce que les liants sont obtenus par une polyméristation radicalaire en deux étapes les monomères pour une première solution de copolymère (A) étant polymérises dans une première etape de façon habituelle par polymérisation radicalaire dans des solvants organiques jusqu'à une conversion de polymérisation supérieure à 90 % puis dans la solution de polymère obtenue une autre solution de polymère étant préparée dans une deuxième étape par polyméristation radicalaire à partir des monomères prévus pour le copolymère (B) sous réserve que le choix des monomères pour les différents constituants polymères soit déterminé de façon que ces derniers diffèrent entre eux en ce qui concerne leur compositions en monomères et/ou leur poids moléculaire ou leurs nombres de viscosité limité et/ou leurs paramètres de solubilité et/ou leur température de transition vitreuse dans une mesure telle qu'ils présentent une incompatibilité en ce sens que leur mélange conduit à une système à deux phases dans le cas ou les constituants sont préparés séparément.

2. Solutions de liants acryliques thermodurcissables selon la revendication 1 caractérisées en ce que 0,1 à 5 % des copolymères se trouvent sous forme liée par de groupes fonctionnels.

3. Procédé de préparation de solutions de liants acryliques thermodurcissables autoréticulants ou à réticulation étrangère dans des solvants organiques caractérisé en ce que dans une première étape l'on polymérise les monomères pour une première solution de copolymère (A) de façon habituelle par polymérisation radicalaire dans des solvants organiques jusqu'à une conversion de polymérisation supérieure à 90 % puis en ce que dans une deuxième étape l'on prépare dans la solution de polymère obtenue une autre solution de polymère par polymérisation radicalaire à partir des monomères prevus pour le copolymère (B) le choix des monomères pour les différents constituants polymères étant déterminé de façon que ces derniers diffèrent entre eux en ce qui concerne leur composition en monomères et/ou leur poids moleculaire ou leurs nombres de viscosité limité et/ou leurs paramètres de système à deux phases dans le cas ou les constituants sont préparés séparément.

4. Procédé selon la revendication 3, caractérisé en ce que dans une solution des copolymères (A) et (B) l'on prépare de façon analogue une ou plusieurs autres solutions de copolymères.

5. Procédé selon les revendications 3 et 4 caractérisé en ce que au cours de la préparation deux ou plusieurs des constituants copolymères se lient chimiquement entre eux par l'intermédiaire de groupes fonctionnels à raison de 0,1 à 5 %.

6. Procédé selon les revendications 3 à 5 caractérisé en ce que les proportions entre la solution de copolymère disposée au préalable et la solution de polymère préparée dans la première solution se situent entre 10 : 90 et 90 : 10.

7. Utilisation dans les peintures à cuire des solutions de liants acryliques themodurcissables selon les revendications precédentes éventuellement en combinaison avec des constituants durcisseurs des catalyseurs des adjuvants de dissolution et de laquage ainsi qu'éventuellement avec des pigments et des charges.

9